# EUROPEAN PATENT APPLICATION

(11) **EP 1 329 310 A1**
(43) Date of publication of application: **23.07.2003**
(21) Application number: 03250199.1
(22) Date of filing: 13.01.2003
(51) Int. Cl.: B32B 27/32, B65D 65/40

(54) **Insulating material**

(30) Priority: 19.01.2002 GB 0201205
(71) Applicant: British Sisalkraft Limited, Rochester, Kent ME2 4ED (GB)
(72) Inventor: Waight, Stephen, Maidstone, Kent ME16 8AD (GB)
(74) Representative: Marles, Alan David

(57) **Abstract**

There is provided an insulating material 10 having a thermoplastic sheet 12 formed to provide bubble cells 13 and a thermoplastic film 11 applied to those areas 14 of the sheet 12 not formed as cells 13. A foil layer is laminated to the surface of the thermoplastic film 11 which is secured to the sheet 12. This structure has been found to be an effective insulation and the reflective layer reduces heat losses due to radiation within the cell structure.

## Description

The present invention relates to insulating materials.

According to a first aspect of the present invention there is provided an insulating material comprising a bubble sheet providing an array of bubble cells which are open on one major side only, and a plastics film incorporating on one major side a reflective surface, said plastics film being secured to said bubble sheet to seal said array of bubble cells, and said reflective surface being on the side of the plastics film which is secured to the bubble sheet.

Preferably said reflective surface is in the form of a metal foil laminated to said plastics film. In preferred arrangements the metal foil is made of aluminium and has a thickness in the range 6 to 12 microns.

In alternative arrangements said reflective surface is in the form of a metallic layer which has been vacuum-metallised to said plastics film.

Ideally said reflective surface has an emissivity to infra-red light in the range 0.04 to 0.1. It is envisaged that said plastics film has a thickness in the range 20 to 100 microns.

Normally the plastics film and the bubble sheet are secured together by lamination using a layer of thermoplastic material such as polyethylene.

Embodiments of the present invention will now be described in more detail. The description makes reference to the followings drawings in which:
Figure 1 is a view from one side of a portion of an insulating material according to the present invention, and
Figure 2 is an enlarged sectional view on line II-II of figure 1,

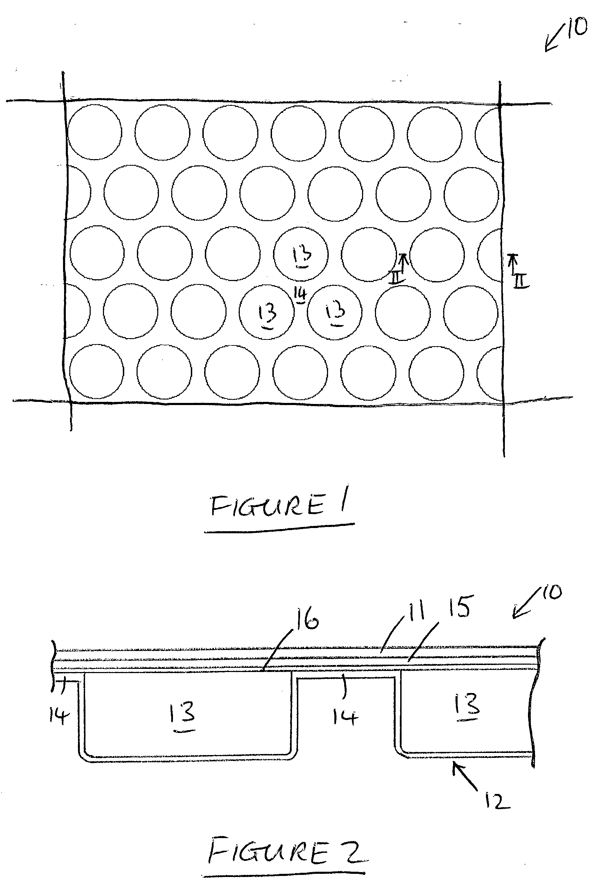

Figures 1 and 2 show an insulating material 10 comprising a thermoplastic film 11, which in this embodiment is a low-density polyethylene film, laminated on one major side to a vacuum formed thermoplastic sheet 12, which in this embodiment is also a low-density polyethylene sheet. The thermoplastic sheet is vacuum formed to provide generally cylindrical bubble cells 13 arranged across the surface. In one particular embodiment each cell 13 has a diameter of 25mm and a depth of 10 mm. As is known, the thermoplastic film 11 is laminated to those areas 14 which are not formed as cells.

The major side of the thermoplastic film 11 which is facing the sheet 12 has an aluminium foil 15 laminated thereto. The foil 15 in turn has a further layer 16 of thermoplastics material on the side of the film 15 opposite the thermoplastic film 11. This further layer 16 enables heat lamination of the film 11 to the areas 14 of the thermoplastic sheet 12.

It is also possible that the aluminium foil or indeed other reflective foil 15 could be replaced by a vacuum-metalised layer of aluminium or other reflective material on a plastics film such as polyester or directly on to the thermoplastic film.

It will be appreciated that the insulating material 10, by virtue of its foil film 15 or metallised layer, provides a reflective property which enables the material 10 to provide effective insulation which is wind-tight and draught-free.

It is envisaged that the vacuum formed sheet 12 may be made, for example, out of low density polyethylene film of a thickness in the range 30 to 100 microns and that the film 11 may be made, for example, from low density polyethylene of a thickness in the range 20 to 100 microns. The aluminium foil 15 may be between 6 and 12 microns in thickness. The further layer 16 maybe a 5 micron layer of polyethylene.

In such arrangements, the reflective surface facing in towards the cell has a low emissivity to infra-red light, typically 0.04-0.10. This reflective layer significantly reduces heat losses due to radiation within the cell structure. The material is lightweight and flexible and may conveniently be made by a continuous process in suitable widths (for example 1000mm - 1500mm) and in rolls of suitable length (typically 25m - 50m).

The composite structure is an effective insulation. Compared to conventional fibrous insulations it is cleaner, lighter, more waterproof and more convenient to use. Compared to conventional reflective insulation it is easier to use because additional airspaces are not required and it is less liable to reduced performance due to dust accumulation and surface contamination. It can be used in several layers to give improved performance. The product can be used as an alternative to conventional insulation materials in building construction, within walls, roofs, floors or other elements, or in packaging where items must be kept hot or cold, or in clothing or similar items such as sleeping bags.

Although the bubble cells 13 described above are cylindrical in shape, it will be understood that other shapes, sizes and sections are possible.

## Claims

1. An insulating material comprising a bubble sheet providing an array of bubble cells which are open on one major side only, and a plastics film incorporating on one major side a reflective surface, said plastics film being secured to said bubble sheet to seal said array of bubble cells, and said reflective surface being on the side of the plastics film which is secured to the bubble sheet.

2. An insulating material as claimed in claim 1 wherein said reflective surface is in the form of a metal foil laminated to said plastics film.

3. An insulating material as claimed in claim 2 wherein the metal foil is made of aluminium and has a thickness in the range 6 to 12 microns.

4. An insulating material as claimed in claim 1 wherein said reflective surface is in the form of a metallic layer which has been vacuum-metallised to said plastics film.

5. An insulating material as claimed in any one of claims 1 to 4 wherein said reflective surface has an emissivity to infra-red light in the range 0.04 to 0.1.

6. An insulating material as claimed in any one of claims 1 to 5 wherein said plastics film has a thickness in the range 20 to 100 microns.

7. An insulating material as claimed in any one of claims 1 to 6 wherein the plastics film and the bubble sheet are secured together by lamination using a layer of thermoplastic material such as polyethylene.
